# EUROPÄISCHE PATENTANMELDUNG

(11) **EP 2 198 718 A1**
(43) Veröffentlichungstag der Anmeldung: **23.06.2010**
(21) Anmeldenummer: 08022087.4
(22) Anmeldetag: 19.12.2008
(51) Int. Cl.: A22C 13/00

(54) **Plasmabehandelte Schlauchfolien**

(71) Anmelder: CaseTech GmbH, 29699 Bomlitz (DE)
(72) Erfinder: Henze-Wethkamp, Heinrich, 29664 Walsrode (DE); Krallmann, Anton, 29862 Bad Fallingbostel (DE)
(74) Vertreter: Polypatent

(57) **Zusammenfassung**

Die vorliegende Erfindung betrifft eine Lebensmittelhülle für Wurstwaren, insbesondere eine schlauchförmige Wursthülle deren Oberfläche zur Verbesserung der Haftung einer Farbbeschichtung durch ein besonderes Verfahren modifiziert ist. Die Erfindung betrifft ferner die Verwendung einer derart oberflächenmodifizierten Nahrungsmittelhülle zur Herstellung einer entsprechenden mit Farbe beschichteten Nahrungsmittelhülle, insbesondere für Wurstwaren.

## Beschreibung

Die Erfindung betrifft eine ein- oder mehrschichtige schlauchförmige Nahrungsmittelhülle, deren Oberfläche zur Verbesserung der Haftung einer Farbbeschichtung durch ein besonderes Verfahren modifiziert ist. Die Erfindung betrifft ferner die Verwendung einer derart oberflächenmodifizierten Nahrungsmittelhülle zur Herstellung einer entsprechenden mit Farbe beschichteten Nahrungsmittelhülle, insbesondere für Wurstwaren.

Schlauchförmige Hüllen sind als Verpackungsmaterialien für Nahrungsmittel vielfältig im Einsatz und werden in sehr großem Umfang für die Herstellung von verarbeiteten Fleischprodukten wie Wurstwaren verwendet. Unter den schlauchförmigen (Wurst-)Hüllen sind insbesondere kunststoffbasierte ein- oder mehrschichtige Hüllen zu nennen. Viele Veredelungsschritte solcher polymeren Schlauchhüllen, wie beispielsweise Bedrucken, Beschichten, Lackieren, Verkleben etc. sind nur möglich, wenn eine ausreichende Benetzbarkeit mit Lösungsmittel oder wasserbasierten Farben, Lacken, Primern, Klebstoffen etc. gegeben ist. In vielen Fällen reicht die Benetzbarkeit der Kunststoffoberfläche dieser Hüllen nicht aus, um ein sicheres Anhaften der entsprechenden Veredelungsbeschichtungen zu ermöglichen.

Üblicherweise wird deshalb bei der Folienverarbeitung eine Corona-Behandlung vorgenommen, wie z.B. in den Druckschriften DE-A 42 12 549, DE-A 36 31 584, DE-A 44 38 533, EP-A 497 996 und DE-A 32 19 538 beschrieben. Dabei werden die bahnförmigen Materialien einer gleichmäßig verteilten elektrischen Entladung ausgesetzt, die dadurch erzielt wird, dass zwischen zwei Arbeitselektroden, von der die eine mit einem dielektrischen Material ummantelt ist, eine hohe Wechselspannung mit einer Frequenz typischerweise zwischen 10 und 100 kHz gelegt wird, so dass eine gleichmäßige Funkenentladung stattfindet. Das zu behandelnde Material wird zwischen den Elektroden durchgeführt und der Entladung ausgesetzt. Dabei wird eine der Elektroden in der Regel von einer Walze gebildet. Durch die Entladungen wird die Polymeroberfläche mit Elektronen beschossen, wobei deren Energie ausreicht, um Bindungen zwischen Kohlenstoff-Wasserstoff und Kohlenstoff-Kohlenstoff aufzubrechen. Die gebildeten Radikale reagieren mit dem Coronagas (üblicherweise Luft) und bilden dabei neue funktionelle Gruppen aus. Des Weiteren findet eine Reinigung der Polymeroberfläche statt, da Folienadditive und ggf. andere Stoffe (wie Monomere, Oligomere und ggf. Walzöle) aufoxidiert und entfernt werden.

Trotz der häufigen Anwendung und der ständigen Weiterentwicklung hat die Corona-Behandlung deutliche Nachteile. So kommt es insbesondere bei höheren Bahngeschwindigkeiten zu einer ungewünschten Rückseiten-Coronaentladung, wenn die bahnförmigen Materialien nicht im Augenblick der Entladung auf der walzenförmigen Elektrode ohne Zwischenraum aufliegen. Weiterhin kommt es durch die Corona-Behandlung zu einer deutlichen elektrostatischen Aufladung der bahnförmigen Materialien, die das Aufwickeln dieser Materialien später erschwert oder nachfolgende Bearbeitungsschritte, wie Lackieren, Bedrucken oder Verkleben behindert.

Schließlich ist die Corona-Behandlung immer eine Filamententladung, die keinen homogen geschlossenen Oberflächeneffekt erzeugt. Außerdem stellt man mit der Zeit fest, dass ein Verlust der Oberflächeneigenschaften aufgrund von Migration von Folienadditiven auftritt und dass eine molekulare Neuanordnung, die auf einer Minimierung der Oberflächenenergie beruht, stattfindet. Außerdem beschränkt sich die Corona-Behandlung auf dünne Substrate, wie Kunststofffolien und Papiere. Bei dickeren Materialien ist der Gesamtwiderstand zwischen den Elektroden zu groß, um die Entladung zu zünden.

Neben der Corona-Entladung können Oberflächenbehandlungen auch durch Flammen oder Licht durchgeführt werden. Die Flammbehandlung wird üblicherweise bei Temperaturen um 1700 °C und Abständen zwischen 5 und 150 mm durchgeführt. Da sich die Folien dabei kurzfristig auf hohe Temperaturen von etwa 140 °C aufheizen, muss eine effektive Kühlung vorgenommen werden. Zur weiteren Verbesserung des Behandlungsergebnisses kann bei der sogenannten polarisierten Flamme der Brenner gegenüber der Kühlwalze auf ein elektrisches Potential gebracht werden, so dass die Ionen der Flamme auf das zu behandelnde Material beschleunigt werden. Als nachteilig bei diesen Verfahren sind insbesondere die genau einzuhaltenden Verfahrensparameter anzusehen. Eine zu geringe Behandlungsintensität führt zu nur schwachen, nicht ausreichenden Effekten. Zu starke Intensitäten führen zu einem Aufschmelzen der Oberflächen, die funktionellen Gruppen tauchen nach innen ab und sind somit unzugänglich. Ebenfalls als nachteilig sind die hohen Temperaturen und die notwendigen Sicherheitsvorkehrungen zu bewerten.. Es ist bekannt, dass die Auswahl des Brennergases nur bestimmte reaktive Spezies (Ionen und Radikale) zulässt und dass die Kosten der Flammbehandlung deutlich höher sind als bei der Corona-Behandlung.

Ein weiteres Verfahren wird in der DE 694 07 335 T2 beschrieben. Im Unterschied zur konventionellen Corona-Behandlung, die mit der Umgebungsluft als Prozessgas arbeitet, liegt bei der sogenannten Corona-Beschichtung eine definierte Prozessgasatmosphäre im Entladungsbereich vor. Durch ausgesuchte Precursoren können Schichtsysteme erhalten werden, die z.B. Schichten auf SiOx-Basis aus siliziumorganischen Verbindungen wie Tetramethylsilan (TMS), Tetarethoxysilan (TEOS) oder Hexamethyldisiloxan (HMDSO), polymerähnliche Kohlenwasserstoffschichten aus Kohlenwasserstoffen wie Methan, Acetylen oder Propargylalkohol sowie fluorierte Kohlenstoffschichten aus fluorierten Kohlenwasserstoffen wie beispielsweise Tetrafluorethen aufweisen. Ein gravierender Nachteil dieses Verfahrens ist jedoch die oft nicht geschlossene Oberflächenabscheidung, verursacht durch die filamentförmige Entladungscharakteristik der Coronabehandlung.

Werden die Schlauchhüllen für Wurstwaren verwendet, so werden diese Hüllen oftmals mit Farbe vollflächig oder teilweise mit Motiven oder Schriftzügen bedruckt. Dabei unterliegt die aufgetragene Druckfarbe extremen Haftungsbedingungen. Nach der Aushärtung der Farbe in der Rolle wird die Schlauchhülle im Konfektionierungsschritt üblicherweise gerafft. Beim Raffen wird die bedruckte Schlauchhülle sehr stark gefaltet, wobei die Farbschicht partiell eine sehr große Dehnung und in der nächsten Phase eine sehr starke Stauchung erfährt. Bei der Anwendung füllfertige Raffung wird der Schlauchhülle zusätzlich neben dem Verarbeitungshilfsstoff Paraffinöl noch eine gewisse Wassermenge zugegeben. All diesen äußeren Einflüssen muss die Farbbeschichtung widerstehen.

Eine weitere Herausforderung betrifft starke Dehnungs- und Schrumpfverhalten vieler Wursthüllen. Beim Füllvorgang mit Brät erfährt die Schlauchhülle eine kurzzeitige starke Dehnung und bei der anschließenden Kochung wird die vorgedehnte Schlauchhülle mit ihrer Farbschicht einer Temperatur von bis zu 121 °C und bis zu 1 Stunde Zeitdauer ausgesetzt. Beim Kochen kommt es infolge der Temperaturerhöhung und Dehnung des Brätes zu einer weiteren Dehnung der Schlauchhülle und beim anschließenden Abkühlen werden wieder Schrumpfvorgänge eingeleitet. All diese Dehnungs- und Schrumpfbewegungen muss der Farbauftrag auf der Nahrungsmittelhülle mitvollziehen ohne sich dabei lösen zu dürfen.

Einer zusätzlichen äußeren mechanischen Belastung unterliegt die gefüllte Wurst in der heißen Kochphase in den so genannten Konti-Kochanlagen. Hier unterliegen die gefüllten Würste beim Kochen mechanischen Belastungen infolge von bewegten Teilen in der Anlage, die für den Transport der Würste installiert wurden.

Konventionelle Druckfarben (Beispiel lösemittelhaltige Druckfarben) bestehen aus 3 Hauptkomponenten und verschiedenen Additiven. Zu den Hauptkomponenten gehören Pigmente, ein Bindemittelsystem und ein Lösemittelsystem. Als Additive können hier Entschäumungsmittel, Verlaufsmittel, Weichmacher, Wachse, Gleitmittel und viele andere genannt werden. Das Lösemittel bewirkt während der Lagerung der Farbe, dass das Bindemittel nicht aushärtet und nicht mit den Pigmenten reagieren kann. Nach der Verdruckung wird das Lösemittel durch Trocknung aus der Farbschicht entfernt und die aufgetragenen Farbschicht verliert an Volumen. Das Bindemittelsystem härtet aus und verbindet sich mit der Bedruckoberfläche. Die Pigmente werden dabei in der Farbschicht eingeschlossen.

In einigen Fällen reicht das oben beschriebene Farbsystem, welches bezüglich des Bindemittels ein einkomponentiges System ist, nicht für eine gute Haftung zur Bedruckoberfläche aus. In diesem Fall wird bei lösemittelhaltigen Farben typischerweise ein Haftungsverstärker wie z.B. Isocyanat kurz vor dem Einfüllen in die Druckmaschine zur Farbe gegeben. Ein solches zweikomponentiges Farbsystem hat jedoch nur eine begrenzte Verarbeitungsdauer von wenigen Stunden. Die einmal vorbereitete Mischung kann nicht gelagert werden, da es auch ohne Lösemittelverdampfung weiter aushärtet.

Bei UV-härtenden Druckfarben, z.B. sogenannten kationischen und radikalischen Druckfarben, befinden sich Bindemittel, Pigmente und Fotoinitiatoren in der Farbe. Nach der Bestrahlung mit UV-Licht wird eine Reaktion in den Fotoinitiatoren angeregt, die sich auf das Bindemittelssystem überträgt. Das Bindemittelsystem polymerisiert und es kommt zur Haftung mit der Bedruckstoffoberfläche. Die Pigmente werden in der polymerisierten Matrix eingebettet. Bei den radikalischen UV-Farben gibt es jedoch bisher kein Bindemittelsystem, das eine ausreichende Haftung auf schwierigen Bedruckoberflächen wie Polyamid gewährleistet. Ähnlich wie bei den Lösemittelfarben kann jedoch auch hier mit Hilfe von Haftungsverstärkern wie z.B. Isocyanat die Haftung verbessert werden.

Es hat sich darüber hinaus gezeigt, dass radikalische UV-Farben im Gegensatz zu kationischen UV-Farben auch dann nicht mit ausreichender Haftung auf Polymeren wie Polyamid 6 zum Haften gebracht werden können, wenn die Oberfläche des Polyamids zuvor einer Corona-Behandlung unterzogen wurde. Radikalische UV-Farben sind jedoch gegenüber kationischen UV-Farben grundsätzlich bevorzugt, da sie kostengünstiger sind. Bei einer coronabehandelten Oberfläche wird eine gewisse Benetzung der radikalischen Farbe auf der Folie erreicht, doch die Ergebnisse nach einem sogenannten Tesa-Test und einem Knittertest nach dem Kochen zeigen eindeutige Haftungsschwächen. Wie der Tesa-Test zeigt, kann bei Polyolefin-Oberflächen mit einer Corona-Behandlung ein besseres Haftungsergebnis mit radikalischen Farben erzielt werden als bei Polyamid-Oberflächen. Jedoch zeigt der Kochtest der so behandelten und bedruckten Oberflächen erhebliche Schwächen auf, so dass auch bei Polyolefin-Oberflächen eine Coronabehandlung nicht zu insgesamt guten Ergebnissen führt.

Es ist bekannt, dass das Haftungsproblem radikalischer Farben auf coronavorbehandelten Polyamidflächen gelöst werden kann, indem die Farbe, die mit der Oberfläche der Schlauchhülle in Kontakt kommt, modifiziert wird. Die Modifizierung besteht üblicherweise darin, dass ein Haftungsverstärker, z.B. aus Isocyanat, eingesetzt wird. Dieser Haftungsverstärker kann entweder z.B. einem Vordrucklack zugesetzt werden, der in einer sehr dünnen Schicht auf der z.B. coronavorbehandelter Oberfläche aufgetragen wird. Oder die Farbe selbst kann mit diesem Haftungsverstärker ausgerüstet werden. In der Regel wird jedoch zunächst ein Vordrucklack, in der Regel ein Klarlack, in dünner Schicht vollflächig aufgedruckt, wobei der Haftungsverstärker nur dem Klarlack zugemischt wird. Erst anschließend wird die eigentliche Farbe aufgetragen.

Bei diesem System gibt es mehrere Nachteile. Zum einen wird mit der Zugabe des Haftungsverstärkers das vormals einkomponentige System zum zweikomponentigen System. Dadurch wird die zeitliche Gebrauchsfähigkeit der angemischten Druckfarbe begrenzt. Bei einkomponentigen UV-Farben reagieren diese im Allgemeinen nicht ohne äußere Einflüsse, d.h. sie härten nicht oder nur sehr langsam aus. Daher kann die Restfarbe nach Ende des Druckauftrags aufbewahrt und beim nächsten Druckauftrag wieder eingesetzt werden. Bei zweikomponentigen Farbsystemen muss die Restfarbe entsorgt werden und steht somit nicht wieder beim nächsten Druckauftrag zur Verfügung. Ein Nachteil ist auch, dass Fehler beim Auftrag des dünn gedruckten Vordrucklack durch den Bediener der Druckmaschinen während oder nach dem Druckprozess nur schwer wahrgenommen werden können, so dass es immer wieder vorkommt, dass abschnittsweise kein modifizierter Klarlack unter der radikalischen Farbe liegt und somit eine Haftung nicht gegeben ist. Dieser Mangel wird in der Regel erst dann erkannt, wenn nach der Füllung der Wurst die Farbe zu schwach haftet und sich leicht abwischen lässt. Schließlich ist noch von Nachteil, dass durch den Vordrucklack ein zusätzliches Farbwerk belegt wird, was die Anzahl anderweitig einzusetzender Farbwerke eingeschränkt.

Ziel der vorliegenden Erfindung war es nun, ein Verfahren zur Verbesserung der Haftung einer Farbbeschichtung auf einer ein- oder mehrschichtigen schlauchförmigen Nahrungsmittelhülle bei der zumindest die äußere Schicht auf Kunststoff basiert zu finden, wobei insbesondere eine radikalische UV-Farbe ohne Haftungsverstärker auf einer solchen Hülle besser haften soll. Ziel war es, eine Nahrungsmittelhülle so fest und sicher mit Farbe beschichten zu können, dass die Haftung der Farbe insbesondere den Kochprozess bei der Wurstherstellung überstehen kann.

Gelöst wird diese Aufgabe durch eine ein- oder mehrschichtige schlauchförmige Nahrungsmittelhülle, wobei zumindest die äußere Schicht auf Kunststoff basiert, **dadurch gekennzeichnet, dass** die Oberfläche der äußeren Schicht zumindest teilweise durch eine Plasmabehandlung modifiziert ist. Eine solche oberflächlich modifizierte Hülle kann dann zumindest teilweise mit Farbe beschichtet werden, wobei die Haftung der Farbe im Vergleich zu einer nicht modifizierten oder nur durch Coronabehandlung modifizierten Oberfläche verbessert ist.

Bei der Coronabehandlung wird die Folienbahn einer elektrischen HochspannungsEntladung ausgesetzt. Diese wird zwischen einer geerdeten, polierten Walze aus Stahl oder Aluminium und einer eng anliegenden isolierten Elektrode erzeugt. Die Folie liegt dabei auf der polierten Walze auf, so dass nur die der Elektrode zugewandte Seite behandelt, also der Entladung ausgesetzt, wird. Die Elektrode wird durch einen Hochfrequenzgenerator mit einer Wechselspannung von 10 bis 20 kV und einer Frequenz zwischen 10 und 60 kHz versorgt.

Im Unterschied zur Coronabehandlung wird bei der Plasmabehandlung mit einer Plasmadüse gearbeitet innerhalb derer mittels Hochspannungsentladung (z.B. 5 bis 15 kV bei 10 bis100 kHz) ein gepulster Lichtbogen erzeugt wird. Ein an der Entladungsstrecke vorbeiströmendes Prozessgas wird dabei angeregt und in den Plasmazustand überführt. Als Prozessgas wird gewöhnlich ölfreie Druckluft verwendet. Das Plasma gelangt anschließend durch einen Düsenkopf auf die Oberfläche des zu behandelnden Materials. Der Düsenkopf liegt üblicherweise auf Massepotential und hält so potentialführende Teile des Plasmastromes weitgehend zurück. Die Plasmaquelle kann je nach erforderlicher Behandlungsleistung im Abstand von 1 bis 40 mm mit einer Geschwindigkeit von 5 bis 400 m/min relativ zur Oberfläche des zu behandelnden Materials bewegt werden.

Vorzugsweise handelt es sich bei der Farbe um eine radikalische UV-Farbe. Unter "UV-Farbe" werden solche Farben bzw. Farbsysteme verstanden, die einen Fotoinitiator oder ein Fotoinitiatorsystem enthalten, welches nach Bestrahlung mit UV-Licht eine chemische Reaktion auslöst, die letztlich dazu führt, dass das in der Farbe enthaltene Bindemittelsystem polymerisiert. Bei dieser Farbklasse werden z.B. ungesättigte Harze mit reaktionsfähigen Gruppen als Bindemittel eingesetzt, die ausgelöst durch freie Radikale zu einer Vernetzungsreaktion führen. Im Allgemeinen handelt es sich hierbei um acrylierte Harze bzw. Monomere mit endständigen Acrylsäuregruppen (Acrylsäureester). Neben den Acrylaten können auch andere Verbindungen mit reaktiven Doppelbindungen, wie z.B. ungesättigte Polyesterharze sowie vinylische Monomere wie z.B. Styrol über diesen Mechanismus vernetzt werden. Bei der Bestrahlung mit UV-Licht zerfallen die eingesetzten Fotoinitiatoren spontan in freie Radikale und lösen eine (Ketten-)Reaktion für die Polymerisation aus.

Hinsichtlich der bevorzugten Anwendung der Nahrungsmittelhülle für Wurstwaren ist die erfindungsgemäße Nahrungsmittelhülle vorzugsweise eine ein- oder mehrschichtige und gegebenenfalls zumindest teilweise mit Farbe beschichtete Nahrungsmittelhülle mit optional wasserdampf- und/oder sauerstoffsperrenden Eigenschaften. Die erfindungsgemäße Nahrungsmittelhülle kann auch eine nahtlose und/oder coextrudierte und/oder biaxial verstreckte Nahrungsmittelhülle sein.

Die Schlauchhüllen können aus einer Materialschicht (einschichtig) oder aus mehreren Materialschichten bestehen, wobei man solche Materialien zu einem Schichtverbund ergänzt, die unterschiedliche besondere Eigenschaften besitzen. Die Schlauchhüllen können auch eingefärbt sein. Die wasserdampfsperrenden Schichten bestehen in der Regel aus Polyolefinen. Die Hüllen können zur Erhöhung der Lagerungszeit der fertigen Würste neben der wasserdampfsperrenden Schicht eine weitere Schicht mit sauerstoffsperrendem Charakter aufweisen. Die sauerstoffsperrenden Schichten können aus verseiftem Ethylenvinylacetat oder Mischungen daraus mit anderen Polymeren bestehen.

Für die Bedruckung von Schlauchhüllen können verschiedene Farbübertragungsverfahren verwendet werden. Folgende Druckverfahren werden für die Bedruckung von Schlauchhüllen eingesetzt: Flexodruck, Tiefdruck und z.T. auch Siebdruck. Die Schlauchhüllen können vollflächig auf beiden Seiten oder auch nur in Teilbereichen oder gar nicht bedruckt sein.

Aufgrund der entsprechenden vorteilhaften Materialeigenschaften und der damit einhergehenden weiten Verbreitung im Markt ist die äußere Schicht der erfindungsgemäßen Nahrungsmittelhülle vorzugsweise eine Schicht auf Basis von Polyamid oder Polyolefin.

Bei dem Material für die Außenschicht der Hüllen auf Basis von Polyamid kann es sich um ein lineares Polyamid (PA) PA 6, PA 66, PA 11, PA 12, und/oder lineares Copolyamid PA 6.66, PA 4.6, PA 6.6, PA 6.8, PA 6.9, PA 6.10, PA 6.11, PA 6.12 oder einer Mischung der vorgenannten Polyamide oder Copolyamide handeln. Dem Polyamid können Anteile an aromatischem Polyamid bzw. teilaromatischem Polyamid zugemischt werden, um z.B. die Verarbeitung oder die Barriereeigenschaften der Hülle zu verbessern.

Neben den Polyamiden können in der Außenschicht auch Polyolefine wie z.B. Polyethylen oder Polypropylen oder Polybuten oder deren Copolymere verwendet werden, die z.B. endgruppenmodifiziert sind, oder auch mit sogenannten lonomerpolymere wie Zn-Ionomere aus Ethylen-Acrylsäure-Copolymeren modifiziert sind. Auch sind Copolymerisate mit Vinylacetat sowie Polyesterverbindungen wie Polyethylentherephthalat geeignet.

Weiterhin kann die Außenschicht Zusatzstoffe wie z.B. Mattierungsmittel, Pigmente und oder Antiblockmittel enthalten.

In einer besonders bevorzugten Ausführungsform der Erfindung ist die Oberfläche der äußeren Schicht der Nahrungsmittelhülle zumindest teilweise mit Farbe beschichtet. Dabei ist insbesondere bevorzugt, dass weder die Oberfläche mit einem einen Haftungsverstärker umfassenden Mittel vorbehandelt ist noch die Farbe einen Haftungsverstärker umfasst. Mit Haftungsverstärker sind hier insbesondere solche Verbindungen gemeint, die eine Vernetzungsreaktion zwischen der Farbe bzw. dem Bindemittel der Farbe und der Oberfläche bewirken. Für diese Anwendungen werden aliphatische oder aromatische Isocyanatverbindungen, insbesondere Polyisocyanate mit zwei oder mehrere Isocyanate (-N=C=O), verwendet.

Ein weiterer Gegenstand der vorliegenden Erfindung ist das Verfahren zur Herstellung der oben beschriebenen erfindungsgemäßen Nahrungsmittelhülle. Dieses Verfahren ist **dadurch gekennzeichnet, dass** die Oberfläche der äußeren Schicht zumindest teilweise durch eine Plasmabehandlung modifiziert wird, indem mittels elektrischer Entladung unter Zufuhr eines Arbeitsgases und mittels einer Düse ein gebündelter Strahl eines reaktiven Mediums erzeugt und die Oberfläche der äußeren Schicht der Nahrungsmittelhülle zumindest teilweise mit diesem Strahl überstrichen wird. Gleichzeitig ist das so beschriebene Verfahren auch ein Verfahren zur Verbesserung der Haftung einer Farbbeschichtung auf einer entsprechenden ein- oder mehrschichtigen schlauchförmigen Nahrungsmittelhülle.

Die Vorteile der Plasmabehandlung liegen in den deutlich höher erreichbaren Oberflächenspannungen und den damit verbundenen Haftungsverbesserungen, z.B. für Verklebungen oder Druckfarben.

In dem bzw. den erfindungsgemäßen Verfahren wird zur Plasmabehandlung eine Vorrichtung verwendet, die einen Rotationskopf umfasst, der mindestens eine exzentrisch angeordnete Plasmadüse zur Erzeugung eines parallel zur Rotationsachse gerichteten Plasmastrahls trägt.

Ein weiterer Aspekt der vorliegenden Erfindung ist die Verwendung einer wie zuvor beschriebenen Vorrichtung zur Modifizierung der Oberfläche der äußeren Schicht einer Nahrungsmittelhülle, insbesondere um die Haftung einer Farbbeschichtung auf dieser Hülle zu verbessern.

Ein noch weiterer Aspekt der vorliegenden Erfindung ist die Verwendung einer wie zuvor beschriebenen plasmabehandelten ein- oder mehrschichtigen schlauchförmigen Nahrungsmittelhülle zur Herstellung einer entsprechenden zumindest teilweise mit Farbe beschichteten Nahrungsmittelhülle.

### Beispiele

Die in den folgenden Beispielen genannten und in der Tabelle 1 aufgeführten Materialien wurden einer Plasma- bzw. Coronabehandlung unterzogen und dann mit radikalischer Farbe bedruckt. Anschließend wurden die Haftungseigenschaften untersucht. Die Ergebnisse der in Abhängigkeit der Corona- oder Plasmabehandlung sind in ebenfalls in der Tabelle 1 aufgeführt.

Verwendete Hüllen:
- Walsroder® K plus SKH (Hersteller CaseTech GmbH, Walsrode), Nennkaliber 60 mm, Dicke: 50µm, außen Polyamid PA 6 (Durethan B40FA, Lanxess, Leverkusen)
- Walsroder® K flex braun (Hersteller CaseTech GmbH, Walsrode), Nennkaliber 60 mm, Dicke 40 µm, außen Polyamid PA 6 (Durethan B40FA, Lanxess, Leverkusen)
- Walsroder® K norm (Hersteller CaseTech GmbH, Walsrode), Nennkaliber 60 mm, Dicke: 40µm, außen Polyamid PA 6 (Durethan B40FA, Lanxess, Leverkusen)
- CN 730 (Hersteller Cryovac, Norderstedt), Nennkaliber 90 mm, Dicke 65µm außen Polyethylen mit Vinylacetat (EVA).
- Walsroder® K smok (Hersteller Case Tech GmbH, Walsrode), Nennkaliber 45 mm, Dicke 30µm, Dicke: 30µm, außen Polyamid PA 6.66 (Ultramid C 35 FN, BASF, Ludwigshafen)

Die Plasmabehandlung erfolgte mit einem umgebauten Gerät der Firma Proserve mit folgenden Parametern: Ionenstromführung der Elektroden innerhalb des Düsengehäuses, Anschluss an Druckluftsystem, Düsenmaterial aus Keramik, Düsenaustrittsfläche 4 mm, Abstand Düsenöffnung zum Darm 8 mm, Druckluftverbrauch ca. 25 L/min bei 6 bar, eingesetzte elektrische Leistung 0,9 kW und einer Bahngeschwindigkeit von 70 m/min.

Bei der Coronabehandlung werden die bahnförmigen Materialien einer gleichmäßig verteilten elektrischen Entladung ausgesetzt, die dadurch erzielt wird, dass zwischen zwei Arbeitselektroden, von der die eine mit einem dielektrischen Material ummantelt ist, eine hohe Wechselspannung mit einer Frequenz typischerweise zwischen 10 und 100 kHz gelegt wird, so dass eine gleichmäßige Funkenentladung stattfindet.

Als radikalische UV-Farbe wurde die handelsübliche Type Resurad 500 ff der Firma Resino Dänemark verwendet. Bei schwer haftenden Substraten kann den Farben, die in Direktkontakt mit der Oberfläche des Bedruckstoffes stehen, noch ein Haftungsverstärker zugemischt werden (siehe Vergleichsbeispiel 2).

### Klebebandtest ("Tesa-Test")

Nach dem Druckvorgang wird nach einer Wartezeit von 1 Tag der Klebebandtest durchgeführt. Das Klebeband Artikel Nr. 4154, Hersteller TESA, das eine Kautschukklebmasse mit der spezifischen Klebekraft 7,5 N/25 mm Klebkraft besitzt, wird auf die bedruckte Schlauchhülle aufgeklebt und danach wieder abgezogen. Nach dem Abziehen wird die Klebeseite auf Farbanhaftungen untersucht und beurteilt. Für eine sehr gute Haftung wird die Note 1 vergeben und eine schlechte Haftung wird mit der Note 6 bewertet. Die Note 1 bedeutet, dass sich keine Druckfarbe nach dem Abziehen des Klebebandes von der Schlauchhülle auf der Klebeseite des Klebebandes befindet und bei der Note 6 befindet sich die komplette Farbschicht auf dem Klebeband, und die Schlauchfolie ist frei von Farbe. Die Ergebnisse sind in Tabelle 1 aufgeführt.

### Kochtest:

Nach dem Druckvorgang wird nach einer Wartezeit von 1 Tag die bedruckte Schlauchhülle für 10 Minuten in 100 °C warmen Wasser gebracht und darin gelagert. Sofort nach der Entnahme wird die Schlauchhülle abgekühlt und mit beiden Händen in einem Abstand von etwa 30 mm zwischen den Händen ergriffen. Dann werden die Hände mit der gefassten Schlauchhülle zusammengeführt und wechselseitig in der waagerechten Schlauchfolieebenen 10 mal hin und her bewegt. Die Hände behalten den Kontakt zu einander und die Bewegungen werden soweit in beiden Richtungen ausgeführt, wie es die Schlauchfolie zulässt, ohne das sie gedehnt wird. Das Hin- und Herbewegen soll in einer Zeitspanne von insgesamt weniger als 5 Sekunden durchgeführt werden

Nach der mechanischen Belastung wird der Abdeckungsgrad der Farbschicht auf der Hüllenoberfläche beurteilt. Die Benotung reicht dabei von 1 bis 6. Bei der Beurteilung 1 ist die Farbschicht durch das Knittern nicht beeinträchtig worden. Die Durchsicht durch die Farbschicht ist weiterhin nicht gegeben. Bei der Beurteilung 6 ist die Farbschicht komplett von der Schlauchhülle getrennt worden. Dazwischen liegen die Abstufung von vereinzelt sichtbaren Knitterfalten bis flächig sichtbaren Bereichen. Die Ergebnisse sind in Tabelle 1 aufgeführt.

### Beispiel 1:

Eine Hülle des Typs Walsroder® K plus SKH rot Nennkaliber 60 mm wurde einer Plasmabehandlung wie oben beschrieben unterworfen und anschließend auf einer Druckmaschine mit der radikalischen Farben der Bezeichnung Resurad 502 des Druckfarbenherstellers Firma Resino bedruckt. Die Resuradfarbe in weiß wurde in das erste und zweite Farbwerk von insgesamt 8 Farbwerken gefüllt. Im ersten Farbwerk befand sich eine Rasterwalze mit 5 g/m² und im zweiten Farbwerk eine Rasterwalze mit 8 g/m² Farbübertragungsvolumen. Die Prozessfarben cyan, magenta, yellow und schwarz wurden in Rasterwalzen verdruckt, die je 5 g/m² Farbe übertragen. Das Druckmotiv ist so angelegt, dass neben der weißen Farbe auch die anderen Farbsorten direkt in Kontakt mit der Darmoberfläche kommen. So lassen sich Farbhaftungsunterschiede zwischen den verschiedenen Farben feststellen.

### Beispiel 2:

Eine Hülle des Typs Walsroder® K flex braun Nennkaliber 60 mm wurde in der gleichen Weise wie Beispiel 1 bedruckt.

### Beispiel 3:

Eine Hülle des Typs Walsroder® K norm Nennkaliber 60 mm wurde wie in Beispiel 1 bedruckt.

### Beispiel 4:

Eine Hülle des Typs Walsroder® K smok Nennkaliber 45 mm wurde wie in Beispiel 1 bedruckt

### Beispiel 5:

Eine Hülle des Typs CN 730/Cryovac Nennkaliber 90 mm wurde wie in Beispiel 1 bedruckt.

### Vergleichsbeispiel 1:

Der in Beispiel 1 verwendete Darm wurde nach einer Corona-Behandlung mit der gleichen Farbe wie in Beispiel 1 bedruckt.

### Vergleichsbeispiel 2:

Der in Beispiel 1 verwendete Darm wurde nach einer Corona-Behandlung mit einem transparenten, zweikomponentigen UV-Vorlack und anschließend mit der gleichen Farbe wie in Beispiel 1 bedruckt. Der zweikomponentige transparente UV-Lack wurde mit dem ersten Farbwerk, welches mit einer Rasterwalze mit einem Farbübertragungsvolumen von 3 g/m² ausgestattet war, gedruckt. Anschließend wurden die Farben entsprechend im jeweils nächsten Farbwerk gedruckt.

### Vergleichsbeispiel 3:

Der in Beispiel 5 verwendete Darm wurde nach einer Corona-Behandlung mit der gleichen Farbe wie in Beispiel 1 bedruckt.

**Tabelle 1: Ergebnisse der Beispiele und Vergleichsbeispiele**

| Beispiel | Oberfläche | Darmsorte | Vorbehandlung P= Plasma C= Corona | UV-Farbsorte | Tesatest | Kochtest |
|---|---|---|---|---|---|---|
| 1 | Polyamid | K plus rot | P | radikalisch | 1 | 1 |
| 2 | Polyamid | K flex braun | P | radikalisch | 1 | 1 |
| 3 | Polyamid | K norm | P | radikalisch | 1 | 1 |
| 4 | Polyamid | K smok | P | radikalisch | 1 | 1 |
| 5 | Polyethylen | CN 730 | P | radikalisch | 1 | 1 |
| Vergleich 1 | Polyamid | K plus rot | C | radikalisch | 6 | 6 |
| Vergleich 2 | Polyamid | K plus rot | C | radikalisch mit 2-komp. Vorlack | 2 | 1 |
| Vergleich 3 | Polyethylen | CN 730 | C | radikalisch | 3,5 | 3 |

## Patentansprüche

1. Ein- oder mehrschichtige schlauchförmige Nahrungsmittelhülle, wobei zumindest die äußere Schicht auf Kunststoff basiert, **dadurch gekennzeichnet, dass** die Oberfläche der äußeren Schicht zumindest teilweise durch eine Plasmabehandlung modifiziert und gegebenenfalls zumindest teilweise mit Farbe beschichtet ist.

2. Nahrungsmittelhülle nach Anspruch 1, wobei die Farbe eine radikalische UV-Farbe ist.

3. Nahrungsmittelhülle nach einem der vorhergehenden Ansprüche, wobei die Nahrungsmittelhülle eine ein- oder mehrschichtige und/oder nahtlose und/oder coextrudierte und/oder biaxial verstreckte und/oder zumindest teilweise mit Farbe beschichtete Nahrungsmittelhülle mit optional wasserdampf- und/oder sauerstoffsperrenden Eigenschaften ist.

4. Nahrungsmittelhülle nach einem der vorhergehenden Ansprüche, wobei die äußere Schicht eine Schicht auf Basis von Polyamid oder Polyolefin ist.

5. Nahrungsmittelhülle nach einem der vorhergehenden Ansprüche, wobei die Oberfläche der äußeren Schicht zumindest teilweise mit Farbe beschichtet ist und wobei weder die Oberfläche mit einem einen Haftungsverstärker umfassenden Mittel vorbehandelt ist noch die Farbe einen Haftungsverstärker umfasst.

6. Verfahren zur Verbesserung der Haftung einer Farbbeschichtung auf einer ein- oder mehrschichtigen schlauchförmigen Nahrungsmittelhülle bei der zumindest die äußere Schicht auf Kunststoff basiert, insbesondere einer Nahrungsmittelhülle wie in den Ansprüche 2 bis 5 näher spezifiziert, und/oder Verfahren zur Herstellung einer solchen Nahrungsmittelhülle, **dadurch gekennzeichnet, dass** die Oberfläche der äußeren Schicht zumindest teilweise durch eine Plasmabehandlung modifiziert wird, indem mittels elektrischer Entladung unter Zufuhr eines Arbeitsgases und mittels einer Düse ein gebündelter Strahl eines reaktiven Mediums erzeugt und die Oberfläche der äußeren Schicht der Nahrungsmittelhülle zumindest teilweise mit diesem Strahl überstrichen wird.

7. Verfahren nach Anspruch 6, wobei zur Plasmabehandlung eine Vorrichtung verwendet wird, die einen Rotationskopf umfasst, der mindestens eine exzentrisch angeordnete Plasmadüse zur Erzeugung eines parallel zur Rotationsachse gerichteten Plasmastrahls trägt.

8. Verwendung einer Vorrichtung mit Hilfe derer mittels elektrischer Entladung unter Zufuhr eines Arbeitsgases und mittels einer Düse ein gebündelter Strahl eines reaktiven Mediums erzeugt und die Oberfläche der äußeren Schicht einer Nahrungsmittelhülle, insbesondere einer Nahrungsmittelhülle wie in den Ansprüche 2 bis 5 näher spezifiziert, zumindest teilweise mit diesem Strahl überstrichen werden kann.

9. Verwendung einer plasmabehandelten ein- oder mehrschichtigen schlauchförmigen Nahrungsmittelhülle zur Herstellung einer entsprechenden zumindest teilweise mit Farbe beschichteten Nahrungsmittelhülle.

10. Nahrungsmittelhülle, Verfahren oder Verwendung nach einem der Ansprüche 1 bis 9, wobei die Nahrungsmittelhülle eine Hülle für Wurstwaren ist.
